# FASCICULE DE BREVET EUROPEEN

(11) **EP 2 697 327 B1**
(45) Date de publication et mention de la délivrance du brevet: **07.06.2017**
(21) Numéro de dépôt: 12722419.4
(22) Date de dépôt: 13.04.2012
(51) Int. Cl.: C09J 161/06, C08L 61/06, C03C 25/34, C08K 7/14, C08L 61/32

(54) **COMPOSITION D'ENCOLLAGE POUR LAINE MINÉRALE RÉSISTANT AU FEU ET PRODUIT ISOLANT OBTENU**
SCHLICHTUNGSZUSAMMENSETZUNG FÜR FEUERBESTÄNDIGE MINERALWOLLE UND GEWONNENES ISOLIERPRODUKT
SIZING COMPOSITION FOR FIRE-RESISTANT MINERAL WOOL AND INSULATION PRODUCT OBTAINED

(30) Priorité: 15.04.2011 FR 1153299
(43) Date de publication de la demande: 19.02.2014
(73) Titulaire: Saint-Gobain Isover, 92400 Courbevoie (FR)
(72) Inventeur: DOUCE, Jérôme, F-69003 Lyon (FR); ROUSSELET, Guillaume, F-60600 Etouy (FR)
(74) Mandataire: Saint-Gobain Recherche
(86) Numéro de dépôt international: PCT/FR2012/050814
(87) Numéro de publication internationale: WO 2012/140380

(56) Documents cités:
- EP-A2- 0 480 778
- WO-A1-93/21124
- WO-A1-2009/040415
- CH-A5- 609 080
- FR-A- 1 465 307
- FR-A1- 2 412 511
- DATABASE CA [Online] CHEMICAL ABSTRACTS SERVICE, COLUMBUS, OHIO, US; NICOLA, GRIGORE ET AL: "Adducts of formaldehyde, melamine, phenols, and polyalkylene glycols", XP002679706, extrait de STN Database accession no. 1987:618588 & RO 89 808 A2 (INSTITUTUL DE CERCETARI STIINTIFICA SI INGINERIE TEHNOLOGICA PENTRU IN) 30 juillet 1986 (1986-07-30)

## Description

La présente invention se rapporte au domaine des produits d'isolation thermique et/ou acoustique aptes à résister au feu, à base de laine minérale, notamment de verre ou de roche, liée par un liant organique.

Plus précisément, l'invention concerne une composition d'encollage contenant une résine thermodurcissable et une résine aldéhyde-amine modifiée par un alcool en tant qu'agent retardateur de feu.

L'invention a aussi pour objet les produits d'isolation à base de laine minérale encollée au moyen de ladite composition d'encollage.

Les produits à base de fibres de verre ou de roche sont largement utilisés, en particulier ceux dont les fibres sont sous la forme de laine minérale qui possèdent des propriétés d'isolation thermique et/ou acoustique.

Ces produits d'isolation sont fabriqués à partir de fibres minérales obtenues par différents procédés, par exemple selon la technique connue du fibrage centrifuge interne ou externe. La technique par centrifugation interne notamment consiste à introduire la matière en fusion (en général du verre ou une roche) dans un dispositif centrifuge comprenant une multitude de petits orifices, la matière étant projetée vers la paroi périphérique du dispositif sous l'action de la force centrifuge et s'en échappant sous la forme de filaments. A la sortie du dispositif centrifuge, les filaments sont étirés et entraînés par un courant gazeux ayant une température et une vitesse élevées, vers un organe récepteur pour former une nappe de fibres.

Pour assurer l'assemblage des fibres entre elles et permettre à la nappe d'avoir de la cohésion, on projette sur les fibres, à la sortie du dispositif centrifuge, une composition d'encollage qui contient une résine thermodurcissable, le plus souvent une résine phénolique appartenant à la famille des résols. La nappe de fibres revêtues de la composition d'encollage est soumise à un traitement thermique (à une température généralement supérieure à 100°C) afin d'effectuer la polycondensation de la résine et obtenir un produit d'isolation thermique et/ou acoustique ayant des propriétés spécifiques, notamment une stabilité dimensionnelle, une résistance à la traction, une reprise d'épaisseur après compression et une couleur homogène.

Dans le produit d'isolation, les fibres minérales sont liées au niveau de leurs points de contact par la résine réticulée qui forme un liant infusible et insoluble dans l'eau.

Dans certaines applications où le produit d'isolation est exposé à des températures élevées, (appareils ménagers, conduits de chauffage, ...) ou doit satisfaire à des réglementations strictes (navires, bâtiments publics, notamment au regard des plafonds), il est impératif que celui-ci possède en outre une bonne résistance au feu. En d'autres termes, il s'avère essentiel que la propagation de la flamme soit empêchée ou au moins retardée quand la résine réticulée qui lie les fibres est soit soumise à des températures importantes provoquant sa combustion, soit exposée directement aux flammes.

Pour améliorer la résistance au feu de tels produits isolants, une solution consiste à ajouter un agent retardateur de feu dans à la composition d'encollage. Ledit agent peut être un composé phosphoré (voir US 4 159 139), un composé halogéné, notamment chloré ou bromé, un composé azoté (voir US 5 840 413), un hydroxyde de métal (voir US 6 368 991 et US 2007/0105467), un sel métallique d'acide carboxylique (voir WO 2010/076533) ou un composé contenant du bore (voir US 4 176 105, US 2 990 307 et US 3218279).

Une autre solution consiste à utiliser en tant que résine thermodurcissable une résine phénol-formaldéhyde modifiée par un composé azoté tel que l'urée, le dicyandiamide ou la mélamine. Lorsque la température s'élève, la résine modifiée permet de libérer de l'azote qui protège le produit d'isolation en lui conférant une meilleure résistance au feu.

Notamment, il est connu d'utiliser une résine phénol-formaldéhyde modifiée par de l'urée en mélange avec soit a) un mélange d'acide borique et d'un composé hydroxylé et b) un composé azoté, soit c) un composé acide borique-hydroxy-amide (voir US 4 480 068).

Une autre solution encore consiste à remplacer une partie de la résine thermodurcissable par une résine aldéhyde-amine, en particulier formaldéhyde-dicyandiamide. Cependant, la stabilité d'une telle résine est faible et n'excède pas 2 à 3 semaines. Au-delà de cette période, la résine devient trouble et a tendance à précipiter ce qui la rend impropre à une utilisation dans un encollage pulvérisable. La stabilité de la résine formaldéhyde-dicyandiamide étant d'autant plus faible que sa concentration est élevée. WO 2009/040415 A1 décrit une résine diluable à l'eau qui contient a) le produit de réaction d'un aldéhyde et d'un composé aromatique hydroxylé, b) un composé aminé portant 2 à 6 groupes aminés et c) un sucre hydrogéné.

WO 93/21124 A1 divulgue un procédé pour accélérer le durcissement d'une laine minérale dans un four à microondes qui consiste à ajouter un composé aromatique dihydroxylé dans une composition d'encollage contenant de la mélamine.

FR 2 412 511 A1 décrit un matériau calorifuge à base de laine minérale et d'un liant qui contient une résine obtenue par réaction à partir de phénol, de formaldéhyde, de soude, d'urée ou de dicyandiamide ou de mélamine, et d'alcoyl résorcine.

RO 89 808 A2 décrit une composition destinée à la fabrication d'articles laminés ou moulés par pressage. La composition contient le produit de réaction d'une résine mélamine formaldéhyde avec un glycol et un résol phénol-formaldéhyde. La présente invention a pour but de proposer une composition d'encollage pour la fabrication de produit d'isolation thermique et/ou acoustique résistant au feu, à base de laine minérale, caractérisée en ce qu'elle contient: - une résine thermodurcissable qui est une résine phénolique et - une résine aldéhyde-amine modifiée par un alcool, l'alcool étant choisit parmi les composés renfermant au moins une fonction hydroxyle libre, à l'exclusion des composés phénoliques, la résine aldéhyde-amine modifiée par un alcool est utilisée à raison de 5 à 70 parts en poids de matières solides pour 100 parts en poids de matières solides de résine thermodurcissable et le cas échéant d'urée. La résine est une résine phénolique, avantageusement appartenant à la famille des résols. Les résols sont obtenus par condensation d'un phénol, en particulier le phénol, et d'un aldéhyde, en particulier le formaldéhyde, en présence d'un catalyseur basique, dans un rapport molaire aldéhyde/phénol supérieur à 1 de manière à favoriser la réaction entre le phénol et l'aldéhyde et à diminuer le taux de phénol résiduel dans la résine.

La résine phénolique peut être une résine phénol-formaldéhyde modifiée par de l'urée, l'urée pouvant être ajoutée au cours de la synthèse (dans le mélange réactionnel contenant le phénol et le formaldéhyde) ou après que la résine a été formée, c'est-à-dire pendant la phase de refroidissement de la résine ou dans la résine finale (à la température ambiante).

Avantageusement, la résine phénolique contient une faible proportion d'aldéhyde libre, en particulier de formaldéhyde, par exemple au plus égale à 0,1 %. Une telle résine est par exemple obtenue par réaction de phénol, de formaldéhyde et d'une amine (WO 23008/043960 et WO 23008/043960) ou par réaction de phénol, de formaldéhyde et de glycine.

La résine aldéhyde-amine modifiée par un alcool non phénolique peut être préparée de différentes manières.

Selon un premier mode de réalisation, on obtient la résine en faisant réagir l'aldéhyde, l'amine et l'alcool en présence d'un acide minéral à une température qui varie de 40 à 80°C pendant 40 à 240 minutes.

Avantageusement, la réaction entre l'aldéhyde, l'amine et l'alcool se déroule selon un cycle de température en trois étapes :
Dans une première étape, on mélange l'aldéhyde et l'alcool et on porte le mélange à une température d'environ 45°C, puis on ajoute l'acide minéral régulièrement sur une durée d'environ 30 minutes.

Dans une deuxième étape, on porte le mélange réactionnel à une température qui varie de 50 à 70°C et on introduit l'amine, de préférence de manière régulière sur une durée d'environ 30 minutes et on maintien à la température précitée pendant 60 à 140 minutes.

Dans une troisième étape, le mélange réactionnel est refroidi à une température qui varie de 20 à 25°C.

L'acide minéral est par exemple un acide contenant du phosphore tel que l'acide phosphorique, l'acide sulfurique, l'acide chlorhydrique, ou un précurseur d'acide, par exemple le sulfate d'ammonium ou l'hydrogénophosphate de sodium. On préfère les acides forts et les précurseurs de tels acides. Avantageusement, l'acide est un acide phosphoré ou un précurseur d'acide.

La quantité d'acide minéral mis en oeuvre est suffisante pour que le pH du milieu réactionnel soit inférieur à 7, de préférence varie de 2 à 6 et avantageusement de 3 à 4.

Dans le cas particulier où l'aldéhyde est le paraformaldéhyde comme indiqué plus loin, ce dernier est avantageusement transformé en formaldéhyde au moyen d'une base qui est introduite au cours de la première étape, dans le mélange d'aldéhyde et d'alcool, avant l'ajout de l'acide minéral.

La base peut être toute base minérale connue de l'homme du métier telle que la triéthanolamine, la chaux et les hydroxydes de métaux alcalins ou alcalino-terreux, par exemple les hydroxydes de sodium, de potassium, de calcium ou de baryum. L'hydroxyde de sodium est préféré.

La quantité de base représente 3 à 20 % en poids du poids de paraformaldéhyde de départ, de préférence 5 à 12 % et avantageusement 6 à 9 %.

Selon un deuxième mode de réalisation, on fait réagir dans une première étape l'aldéhyde et l'amine à une température qui varie de 40 à 80°C, de préférence 50 à 70°C, pendant 40 à 240 minutes, de préférence 60 à 140°C, puis on refroidit le milieu réactionnel jusqu'à la température de 20 à 25°C et dans une deuxième étape on y ajoute l'alcool et l'acide minéral.

L'acide minéral est de même nature que celui mis en oeuvre pour le premier mode de réalisation. La quantité d'acide est suffisante pour que le pH varie de 3 à 5, de préférence de l'ordre de 4,5.

Dans l'un ou l'autre des modes de réalisation précités, on met en oeuvre les réactifs dans des proportions telles que le rapport molaire aldéhyde/amine varie de 0,7 à 2, de préférence 0,8 à 1,2, et que le rapport molaire alcool/amine varie de 0,4 à 2, de préférence 0,6 à 1,2.

L'aldéhyde peut être le formaldéhyde, le paraformaldéhyde, l'acétaldéhyde ou le glyoxal, le formaldéhyde et le paraformaldéhyde étant préférés.

L'amine est choisie parmi le dicyandiamide, la mélamine, la guanidine et l'aminoguanidine. On préfère le dicyandiamide.

L'alcool peut être tout composé renfermant au moins une fonction hydroxyle libre, à l'exclusion des composés phénoliques. A titre d'exemple d'un tel alcool, on peut citer l'éthanol, le propanol, le butanol, l'éthylène glycol, le propylène glycol, les polyalkylèneglycols tels que les polyéthylèneglycols et les polypropylèneglycols, le glycérol, les saccharides, de préférence les oligosaccharides (au plus 10 motifs de sucre), tels que le glucose et le saccharose, et les dérivés hydrogénés des saccharides précités, tels que le sorbitol. De préférence, l'alcool renferme au moins deux fonctions hydroxyles libres, avantageusement au moins trois et mieux encore au plus 100, de préférence au plus 10.

L'alcool conforme à l'invention peut être constitué d'un seul alcool ou d'un mélange d'alcools. On préfère le glycérol, le glucose, le saccharose et les mélanges d'oligosaccharides, avantageusement obtenus par hydrolyse d'amidon.

La résine préférée est obtenue par réaction de formaldéhyde, de dicyandiamide et de glycérol ou de formaldéhyde, de dicyandiamide et d'oligosaccharides.

La résine aldéhyde-amine modifiée par un alcool obtenue présente une teneur en matières solides (extrait sec) de l'ordre de 50 %. Le pH de la résine varie généralement de 3 à 5.

Dans la composition d'encollage, la résine aldéhyde-amine modifiée par un alcool non phénolique est utilisée à raison de 5 à 70 parts en poids (de matières solides) pour 100 parts en poids (de matières solides) de résine thermodurcissable et le cas échéant d'urée, de préférence au plus 60 parts, avantageusement au moins 10 parts et mieux encore de 20 à 40 parts.

La composition d'encollage préférée renferme une résine phénol-formaldéhyde à faible teneur en formaldéhyde libre, éventuellement modifiée par de l'urée, de préférence une résine obtenue par réaction de phénol, de formaldéhyde et d'une amine ou de glycine, et une résine formaldéhyde-dicyandiamide-glycérol ou formaldéhyde-dicyandiamide-oligosaccharides.

La composition d'encollage conforme à l'invention peut comprendre en outre les additifs conventionnels ci-après dans les proportions suivantes calculées sur la base de 100 parts en poids de résine thermodurcissable, le cas échéant d'urée, et de résine aldéhyde-amine modifiée par un alcool :
- 0 à 2 parts de silane, en particulier un aminosilane,
- 0 à 20 parts d'huile, de préférence 4 à 15 parts,
- 0 à 25 parts d'un catalyseur de réticulation, par exemple le sulfate d'ammonium ou l'hyposulfite de sodium, de préférence moins de 7 parts,
- 0 à 25 parts d'un sucre, de préférence le glucose ou le saccharose,
- 0 à 20 parts d'ammoniaque (solution à 20 % en poids), de préférence moins de 12 parts,
- 0 à 20 parts d'un silicone.

Le rôle des additifs est connu et brièvement rappelé : le silane est un agent de couplage entre les fibres et le liant, et joue également le rôle d'agent anti-vieillissement , les huiles sont des agents anti-poussières et hydrophobes ; le sulfate d'ammonium ou l'hyposulfite de sodium sert de catalyseur de réticulation (dans l'étuve à chaud) après la pulvérisation de la composition d'encollage sur les fibres ; le sucre sert d'extendeur ; l'ammoniaque joue, à froid, le rôle de retardateur de polycondensation ; le silicone joue le rôle d'agent hydrophobe.

La laine minérale sur laquelle est appliquée la composition d'encollage peut être constituée de fibres de verre ou de roche.

Les fibres de verre peuvent être constituées d'un verre de quelque nature que ce soit, en particulier un verre à teneur élevée en alumine tel que décrit dans WO 00/17117, qui comprend les constituants ci-après dans les proportions suivantes, exprimées en pourcentages pondéraux :

| | |
|---|---|
| SiO₂ | 39-55 %, de préférence 40-52 % |
| Al₂O₃ | 16-27 %, de préférence 16-25 % |
| CaO | 3-35 %, de préférence 10-25 % |
| MgO | 0-15 %, de préférence 0-10 % |
| Na₂O | 0-15 %, de préférence 6-12 % |
| K₂O | 0-15 %, de préférence 3-12 % |
| R₂O (Na₂O + K₂O) | 10-17 %, de préférence 12-17 % |
| P₂O₅ | 0-3 %, de préférence 0-2 % |
| Fe₂O₃ | 0-15 %, |
| B₂O₃ | 0-8 %, de préférence 0-4 % |
| TiO₂ | 0-3 %, |

la teneur en MgO étant comprise entre 0 et 5 % lorsque la teneur en R₂O est inférieure ou égale à 13,0 %.

Avantageusement, le verre a la composition décrite dans WO 2005/033032 qui comprend les constituants ci-après dans les proportions suivantes (en % pondéral) :

| | |
|---|---|
| SiO₂ | 39-44 %, de préférence 40-43 % |
| Al₂O₃ | 16-27 %, de préférence 16-26 % |
| CaO | 6-20 %, de préférence 8-18 % |
| MgO | 1-5 %, de préférence 1-4,9 % |
| Na₂O | 0-15 %, de préférence 2-12 % |
| K₂O | 0-15 %, de préférence 2-12 % |
| R₂O (Na₂O + K₂O) | 10-14,7 %, de préférence 10-13,5 % |
| P₂O₅ | 0-3 %, notamment 0-2 % |
| Fe₂O₃ | 1,5-15 %, notamment 3,2-8 % |
| B₂O₃ | 0-2 %, de préférence 0-1 % |
| TiO₂ | 0-2 %, de préférence 0,4-1 %. |

La fabrication de produits d'isolation à base de laine minérale est bien connue : elle comprend une étape de fabrication de la laine elle-même, une étape d'encollage de la laine minérale et une étape de traitement thermique en vue de lier la laine minérale.

La première étape de fabrication de la laine minérale peut être mise en oeuvre par différents procédés, par exemple selon la technique connue du fibrage par centrifugation interne ou externe.

La centrifugation interne consiste à introduire la matière minérale en fusion (verre ou roche) dans un dispositif centrifuge comprenant une multitude de petits orifices, la matière étant projetée vers la paroi périphérique du dispositif sous l'action de la force centrifuge et s'en échappant sous la forme de filaments. A la sortie du dispositif centrifuge, les filaments sont étirés et entraînés vers un organe récepteur par un courant gazeux ayant une température et une vitesse élevées, pour y former une nappe de fibres (ou laine minérale).

La centrifugation externe consiste, elle, à déverser la matière en fusion à la surface périphérique externe d'organes rotatifs appelés rotors, d'où la fusion est éjectée sous l'action de la force centrifuge. Des moyens d'étirage par courant gazeux et de collecte sur un organe de réception sont également prévus.

Dans la deuxième étape, on projette sur les fibres, sur le trajet allant de la sortie du dispositif centrifuge vers l'organe récepteur, une composition d'encollage contenant une résine thermodurcissable dont le rôle est d'assurer l'assemblage des fibres entre elles et de permettre à la laine minérale d'avoir de la cohésion.

Dans la troisième étape, les fibres revêtues de l'encollage rassemblées en une nappe sont soumises à un traitement thermique, à une température généralement supérieure à 100°C, afin d'effectuer la polycondensation de la résine et obtenir ainsi une liaison des fibres par un liant infusible et insoluble dans l'eau.

A la sortie du dispositif de traitement thermique, le produit d'isolation est collecté sous forme d'enroulements ou de panneaux découpés aux dimensions souhaitées, puis emballé.

La quantité totale de résine thermodurcissable, éventuellement d'urée, et de résine aldéhyde-amine modifiée par un alcool représente 1 à 20 % en poids (de matières solides) par rapport au poids total du produit d'isolation, de préférence au plus 15 %.

Selon un mode de réalisation préféré, la résine aldéhyde-amine modifiée par un alcool est incorporée dans la composition d'encollage avant l'application sur la laine minérale.

L'incorporation de la résine aldéhyde-amine modifiée par un alcool peut se faire de manière extemporanée pour une application immédiate de la composition d'encollage, ou dans la résine thermodurcissable (ou « premix ») qui est ensuite conservée pendant une durée variable à une température de l'ordre de 10 à 20°C avant l'utilisation dans la composition d'encollage.

Selon un autre mode de réalisation, la résine aldéhyde-amine modifiée par un alcool est appliquée séparément de la composition d'encollage, par exemple au moyen d'une couronne de pulvérisation distincte de celle qui permet l'application de la composition d'encollage.

Les exemples qui suivent permettent d'illustrer l'invention.

Dans ces exemples, on caractérise l'aptitude à la dilution par la « diluabilité » que l'on définit comme étant le volume d'eau déionisée qu'il est possible, à une température donnée, d'ajouter à une unité de volume de la solution aqueuse de résine avant l'apparition d'un trouble permanent. On considère généralement qu'une résine est apte à être utilisée en tant qu'encollage lorsque sa diluabilité est égale ou supérieure à 1000 %, à 20°C. Une diluabilité égale ou supérieure à 2000 %, à 20°C, est qualifiée de « diluabilité infinie ».

### EXEMPLE 1

Dans un réacteur, on introduit 244 parts en poids d'eau, 310 parts en poids de paraformaldéhyde à 96 %, 351 parts en poids d'eau et 279 parts en poids de glycérol. Le réacteur est chauffé à 45°C.

On ajoute dans le réacteur à intervalles réguliers 44 parts en poids d'une solution aqueuse de soude à 50 % en 30 minutes, puis de l'acide phosphorique en 10 minutes jusqu'à l'obtention d'un pH égal à 3,5.

On ajoute ensuite à intervalles réguliers 254 parts en poids de dicyandiamide en 60 minutes. Le mélange réactionnel est maintenu à 50°C pendant 85 minutes, puis il est refroidi jusqu'à la température ambiante.

La résine formaldéhyde-dicyandiamide-glycérol obtenue présente une teneur en formaldéhyde libre égale à 1 % en poids, un extrait sec égal à 40 %, une diluabilité à l'eau supérieure à 2000 % et un pH égal à 4,5.

La résine est stable (aucun précipité) pendant au moins 12 mois.

### EXEMPLE 2

On procède dans les conditions de l'exemple 1 modifié en ce qu'on n'ajoute pas les 244 parts d'eau dans le réacteur.

La résine formaldéhyde-dicyandiamide-glycérol obtenue présente une teneur en formaldéhyde libre égale à 1 % en poids, un extrait sec égal à 50 %, une diluabilité à l'eau supérieure à 2000 % et un pH égal à 4,5.

La résine est stable (aucun précipité) pendant au moins 12 mois.

### EXEMPLE 3

On procède dans les conditions de l'exemple 2 modifié en ce qu'on remplace le glycérol par du glucose.

La résine formaldéhyde-dicyandiamide-sucre obtenue présente une teneur en formaldéhyde libre égale à 1 % en poids, un extrait sec égal à 50 %, une diluabilité à l'eau supérieure à 2000 % et un pH égal à 4,5.

La résine est stable (aucun précipité) pendant au moins 12 mois.

### EXEMPLE 4

On procède dans les conditions de l'exemple 2 modifié en ce que l'on remplace le paraformaldéhyde (310 parts en poids) par du formaldéhyde à 37 % en poids dans l'eau (116,8 parts en poids) et que l'on n'ajoute pas l'eau et la soude.

La résine formaldéhyde-dicyandiamide-glycérol obtenue présente une teneur en formaldéhyde libre égale à 1 % en poids, un extrait sec égal à 50 %, une diluabilité à l'eau supérieure à 2000 % et un pH égal à 4,5.

La résine est stable (aucun précipité) pendant au moins 12 mois.

### EXEMPLE 5

Dans un réacteur, on introduit 390,4 parts en poids d'eau à 40°C et 116,8 parts en poids d'une solution aqueuse de formaldéhyde à 37 %. Le réacteur est chauffé à 45°C.

On ajoute dans le réacteur à intervalles réguliers 100 parts en poids de dicyandiamide en 60 minutes. Le mélange réactionnel est maintenu à 50°C pendant 85 minutes, puis il est refroidi jusqu'à la température ambiante.

On ajoute ensuite 112 parts en poids de glycérol et 1,6 partie en poids de sulfate d'ammonium.

La résine obtenue présente une diluabilité à l'eau supérieure à 2000 % et un pH égal à 4,5.

La résine est stable (aucun précipité) pendant au moins 12 mois.

### EXEMPLE 6

On procède dans les conditions de l'exemple 5 modifié en ce qu'on remplace le glycérol par du glucose.

La résine obtenue présente une diluabilité à l'eau supérieure à 2000 % et un pH égal à 4,5.

La résine est stable (aucun précipité) pendant au moins 12 mois.

### EXEMPLES 7 A 9

On fabrique de la laine de verre par la technique de la centrifugation interne dans laquelle la composition de verre fondu est transformée en fibres au moyen d'un outil dénommé assiette de centrifugation, comprenant un panier formant chambre de réception de la composition fondue et une bande périphérique percée d'une multitude d'orifices : l'assiette est mue en rotation autour de son axe de symétrie disposé verticalement, la composition est éjectée à travers les orifices sous l'effet de la force centrifuge et la matière s'échappant des orifices est étirée en fibres avec l'assistance d'un courant de gaz d'étirage.

De façon classique, une couronne de pulvérisation de la composition d'encollage est disposée au-dessous de l'assiette de fibrage de façon à répartir régulièrement la composition d'encollage sur la laine de verre venant d'être formée.

La laine minérale ainsi encollée est collectée sur un convoyeur à bande équipé de caissons d'aspiration internes qui retiennent la laine minérale sous forme d'un feutre ou d'une nappe à la surface du convoyeur. Le convoyeur circule ensuite dans une étuve maintenue à 250°C où les constituants de l'encollage polymérisent pour former un liant.

La composition d'encollage comprend les constituants ci-après dans les proportions suivantes (en parts pondérales de matières sèches) :
- résine thermodurcissable 56
- urée 14
- résine (agent retardateur de feu) 30
- silane 0,35
- sulfate d'ammonium 2,1
- huile minérale 5,6

Les produits d'isolation présentent une densité de 93 kg/m³ et une épaisseur de 42 mm.

La résine thermodurcissable est un résol obtenu par réaction de phénol, de formaldéhyde et de monoéthanolamine dans les conditions de l'exemple 1 de WO 2008/043960.

La résine utilisée en tant qu'agent retardateur de feu est la résine formaldéhyde-dicyandiamide-glycérol de l'exemple 2 (exemple 7) et une résine formaldéhyde-dicyandiamide préparée dans les conditions de l'exemple 2 sans ajout de glycérol (exemple 8 comparatif). A titre de comparaison, il a été utilisé également une composition d'encollage ne contenant pas de résine en tant qu'agent anti-feu (exemple 9 comparatif).

Les produits d'isolation selon les exemples 7 à 9 présentent une perte au feu égale à 8 % (la perte au feu correspondant à la proportion pondérale de matières organiques sur le produit, que l'on détermine par pesée différentielle du produit avant/après traitement thermique de décomposition des matières organiques).

On soumet les produits d'isolation au test de combustion lente (« glowing » en anglais) selon la norme DIN 4102-15 (1990). On mesure la longueur résiduelle à l'intérieur du produit, qui demeure intact après avoir subi le test. Le produit répond à la norme si la longueur résiduelle est au moins égale à 35 cm.

| | Ex. 7 | Ex. 8 (comp.) | Ex. 9 (comp.) |
|---|---|---|---|
| Longueur résiduelle (cm) | 43 | 41 | 0 |

Les performances mécaniques des produits d'isolation sont comparables, notamment en ce qui concerne la résistance à la compression et l'épaisseur du produit mesurées avant et après traitement dans un autoclave.

### EXEMPLES 10 et 11

On fabrique de la laine de verre dans les conditions des exemples 7 à 9.

La composition d'encollage comprend les constituants ci-après dans les proportions suivantes (en parts pondérales de matières sèches) :
- résine thermodurcissable 52,5
- urée 10,5
- résine (agent retardateur de feu) 30
- silane 0,35
- sulfate d'ammonium 0,7
- glucose 7
- huile minérale 5,6

Les produits d'isolation présentent une densité de 53 kg/m³ et une épaisseur de 17 mm.

La résine thermodurcissable est un résol obtenu réaction de phénol, de formaldéhyde et de glycine dans les conditions suivantes :
Dans un réacteur de 2 litres surmonté d'un condenseur et équipé d'un système d'agitation, on introduit 318,5 g de phénol (pureté 99 % ; 3,35 moles) 261,9 g de paraformaldéhyde (pureté 96 % ; 9,37 moles) et 296,8 g d'eau, et on chauffe le mélange à 45°C sous agitation. Le rapport molaire formaldéhyde/phénol est égal à 2,5.

On ajoute régulièrement en 30 minutes 47,4 g de soude en solution aqueuse à 50 % (soit 7 % en poids par rapport au phénol), puis on élève la température progressivement à 70°C en 30 minutes et on la maintient pendant 120 minutes (taux de conversion du phénol au moins égal à 93 %).

Ensuite, on diminue la température à 60°C en 30 minutes et simultanément on introduit dans le mélange réactionnel, de manière régulière, 75 g de glycine (pureté 98 % ; 0,98 mole). On maintient la température à 60°C pendant 90 minutes puis on refroidit le mélange jusqu'à 20°C environ en 40 minutes. La résine liquide obtenue est limpide, possède un extrait sec égal à 55 %, un pH égal à 7,4 et une diluabilité à l'eau, à 20°C, supérieure à 2000 %. La résine présente un taux de formaldéhyde libre inférieur à 0,1 % et un taux de phénol libre égal à 0,25 %, les taux étant exprimés en poids total de liquide. La résine est stable pendant au moins 6 semaines à 20°C.

La résine utilisée en tant qu'agent retardateur de feu est la résine formaldéhyde-dicyandiamide-glycérol de l'exemple 2 (exemple 10). A titre de comparaison, il a été utilisé également une composition d'encollage ne contenant pas de résine en tant qu'agent anti-feu (exemple 11 comparatif).

Les produits d'isolation selon les exemples 10 à 11 présentent une perte au feu égale à 8 % (la perte au feu correspondant à la proportion pondérale de matières organiques sur le produit, que l'on détermine par pesée différentielle du produit avant/après traitement thermique de décomposition des matières organiques).

On soumet les produits d'isolation au test de résistance au feu décrit dans les exemples 7 à 9.

| | Ex. 10 | Ex. 11 (comp.) |
|---|---|---|
| Longueur résiduelle (cm) | 50 | 10 |

Les performances mécaniques des produits d'isolation sont comparables, notamment en ce qui concerne la résistance à la compression et l'épaisseur du produit mesurées avant et après traitement dans un autoclave.

## Revendications

1. Composition d'encollage pour la fabrication de produit d'isolation thermique et/ou acoustique résistant au feu, à base de laine minérale, **caractérisée en ce qu'**elle contient :
- une résine thermodurcissable qui est une résine phénolique et
- une résine aldéhyde-amine modifiée par un alcool, l'alcool étant choisit parmi les composés renfermant au moins une fonction hydroxyle libre, à l'exclusion des composés phénoliques,
la résine aldéhyde-amine modifiée par un alcool est utilisée à raison de 5 à 70 parts en poids de matières solides pour 100 parts en poids de matières solides de résine thermodurcissable et le cas échéant d'urée.

2. Composition selon la revendication 1, **caractérisée en ce que** la résine phénolique thermodurcissable est un résol, éventuellement modifiée par de l'urée.

3. Composition selon la revendication 2, **caractérisée en ce que** la résine phénolique présente une proportion d'aldéhyde libre au plus égale à 0,1 %.

4. Composition selon l'une des revendications 1 à 3, **caractérisée en ce que** l'aldéhyde entrant dans la constitution de la résine aldéhyde-amine modifiée par un alcool est choisi parmi le formaldéhyde, le paraformaldéhyde, l'acétaldéhyde et le glyoxal, de préférence le formaldéhyde ou le paraformaldéhyde.

5. Composition selon l'une des revendications 1 à 4, **caractérisée en ce que** l'amine entrant dans la constitution de la résine aldéhyde-amine modifiée par un alcool est le dicyandiamide, la mélamine, la guanidine et l'aminoguanidine, de préférence le dicyandiamide.

6. Composition selon l'une des revendications 1 à 5, **caractérisée en ce que** l'alcool entrant dans la constitution de la résine aldéhyde-amine modifiée par un alcool renferme au moins 2 fonctions hydroxyles libres, de préférence au moins 3 et avantageusement au plus 100, de préférence au plus 10.

7. Composition selon la revendication 6, **caractérisée en ce que** l'alcool est le glycérol ou un saccharide, de préférence un oligosaccharide.

8. Composition selon la revendication 7, **caractérisée en ce qu'**il s'agit de glucose ou de saccharose.

9. Composition selon l'une des revendications 1 à 8, **caractérisée en ce que** la résine aldéhyde-amine modifiée par un alcool est obtenue par réaction de formaldéhyde, de dicyandiamide et de glycérol ou de formaldéhyde, de dicyandiamide et d'oligosaccharides.

10. Composition selon l'une des revendications 1 à 9, **caractérisée en ce que** la résine aldéhyde-amine modifiée par un alcool est utilisée à raison d'au plus 60 parts en poids (de matières solides) pour 100 parts en poids (de matières solides) de résine phénolique thermodurcissable et le cas échéant d'urée, avantageusement au moins 10 parts et mieux encore de 20 à 40 parts.

11. Composition selon l'une des revendications 1 à 10, **caractérisée en ce qu'**elle renferme une résine phénol-formaldéhyde à teneur en formaldéhyde libre au plus égale à 0,1 %, éventuellement modifiée par de l'urée, et une résine formaldéhyde-dicyandiamide-glycérol ou formaldéhyde-dicyandiamide-oligosaccharides.

12. Composition d'encollage selon l'une des revendications 1 à 11, **caractérisée en ce qu'**elle comprend en outre les additifs ci-après dans les proportions suivantes calculées sur la base de 100 parts en poids de résine phénolique thermodurcissable, le cas échéant d'urée, et de résine aldéhyde-amine modifiée par un alcool :
- 0 à 2 parts de silane, en particulier un aminosilane,
- 0 à 20 parts d'huile, de préférence 4 à 15 parts,
- 0 à 25 parts d'un catalyseur de réticulation, par exemple le sulfate d'ammonium ou l'hyposulfite de sodium, de préférence moins de 7 parts,
- 0 à 25 parts d'un sucre, de préférence le glucose ou le saccharose,
- 0 à 20 parts d'ammoniaque (solution à 20 % en poids), de préférence moins de 12 parts,
- 0 à 20 parts d'un silicone.

13. Composition d'encollage selon l'une des revendications 1 à 12, **caractérisée en ce que** la résine aldéhyde-amine modifiée par un alcool présente un pH qui varie de 3 à 5.

14. Produit d'isolation thermique et/ou acoustique apte à résister au feu, à base de laine minérale, notamment de roche ou de verre, liée par une composition d'encollage selon l'une des revendications 1 à 13.

15. Produit selon la revendication 14, **caractérisé en ce que** la laine minérale est constituée de fibres de verre qui comprend les constituants ci-après dans les proportions suivantes, exprimées en pourcentages pondéraux :
| | |
|---|---|
| SiO₂ | 39-55 %, de préférence 40-52 % |
| Al₂O₃ | 16-27 %, de préférence 16-25 % |
| CaO | 3-35 %, de préférence 10-25 % |
| MgO | 0-15 %, de préférence 0-10 % |
| Na₂O | 0-15 %, de préférence 6-12 % |
| K₂O | 0-15 %, de préférence 3-12 % |
| R₂O (Na₂O + K₂O) | 10-17 %, de préférence 12-17 % |
| P₂O₅ | 0-3 %, de préférence 0-2 % |
| Fe₂O₃ | 0-15 %, |
| B₂O₃ | 0-8 %, de préférence 0-4 % |
| TiO₂ | 0-3 %, |
la teneur en MgO étant comprise entre 0 et 5 % lorsque la teneur en R₂O est inférieure ou égale à 13,0 %.

16. Produit selon la revendication 14, **caractérisé en ce que** le verre comprend les constituants ci-après dans les proportions suivantes (en % pondéral) :
| | |
|---|---|
| SiO₂ | 39-44 %, de préférence 40-43 % |
| Al₂O₃ | 16-27 %, de préférence 16-26 % |
| CaO | 6-20 %, de préférence 8-18 % |
| MgO | 1-5 %, de préférence 1-4,9 % |
| Na₂O | 0-15 %, de préférence 2-12 % |
| K₂O | 0-15 %, de préférence 2-12 % |
| R₂O (Na₂O + K₂O) | 10-14,7 %, de préférence 10-13,5 % |
| P₂O₅ | 0-3 %, notamment 0-2 % |
| Fe₂O₃ | 1,5-15 %, notamment 3,2-8 % |
| B₂O₃ | 0-2 %, de préférence 0-1 % |
| TiO₂ | 0-2 %, de préférence 0,4-1 %. |

17. Produit selon l'une des revendications 14 à 16, **caractérisé en ce que** la quantité totale de résine thermodurcissable, éventuellement d'urée, et de résine aldéhyde-amine modifiée par un alcool représente 1 à 20 % en poids (de matières solides) par rapport au poids total du produit d'isolation.

## Patentansprüche

1. Bindemittelzusammensetzung für die Herstellung eines feuerhemmenden thermischen und/oder akustischen Dämmstoffs, auf Basis von Mineralwolle, **dadurch gekennzeichnet, dass** sie enthält:
- ein wärmehärtbares Harz, welches ein Phenolharz ist, und
- ein alkoholmodifiziertes Aldehyd-Amin-Harz, wobei der Alkohol ausgewählt ist aus den Verbindungen mit wenigstens einer freien Hydroxylfunktion, mit Ausnahme von phenolischen Verbindungen,
wobei das alkoholmodifizierte Aldehyd-Amin-Harz in einem Verhältnis von 5 bis 70 Gew.-Teilen Feststoff je 100 Gew.-Teile Feststoff des wärmehärtbaren Harzes und gegebenenfalls Harnstoff eingesetzt ist.

2. Zusammensetzung nach Anspruch 1, **dadurch gekennzeichnet, dass** das wärmehärtbare Phenolharz ein Resol ist, gegebenenfalls harnstoffmodifiziert.

3. Zusammensetzung nach Anspruch 2, **dadurch gekennzeichnet, dass** das Phenolharz einen Anteil an freiem Aldehyd von höchsten 0,1% aufweist.

4. Zusammensetzung nach einem der Ansprüche 1 bis 3, **dadurch gekennzeichnet, dass** das in der Erstellung des alkoholmodifizierten Aldehyd-Amin-Harzes eingesetzte Aldehyd ausgewählt ist aus Formaldehyd, Paraformaldehyd, Acetaldehyd und Glycoxal, vorzugsweise Formaldehyd oder Paraformaldehyd.

5. Zusammensetzung nach einem der Ansprüche 1 bis 4, **dadurch gekennzeichnet, dass** das in der Erstellung des alkoholmodifizierten Aldehyd-Amin-Harzes eingesetzte Amin Dicyandiamid, Melamin, Guanidin und Aminoguanidin ist, vorzugsweise Dicyandiamid.

6. Zusammensetzung nach einem der Ansprüche 1 bis 5, **dadurch gekennzeichnet, dass** der in der Erstellung des alkoholmodifizierten Aldehyd-Amin-Harzes eingesetzte Alkohol wenigstens zwei freie Hydroxylfunktionen aufweist, vorzugsweise wenigstens 3, und vorteilhaft höchstens 100, vorzugsweise höchstens 10.

7. Zusammensetzung nach Anspruch 6, **dadurch gekennzeichnet, dass** der Alkohol Glycerin oder ein Saccharid, vorzugsweise ein Oligosaccharid ist.

8. Zusammensetzung nach Anspruch 6, **dadurch gekennzeichnet, dass** es sich um Glucose oder Saccharose handelt.

9. Zusammensetzung nach einem der Ansprüche 1 bis 8, **dadurch gekennzeichnet, dass** das alkoholmodifizierte Aldehyd-Amin-Harz durch Reaktion von Formaldehyd, Dicyandiamid und Glycerin oder von Formaldehyd, Dicyandiamid und Oligosacchariden erhalten wird.

10. Zusammensetzung nach einem der Ansprüche 1 bis 9, **dadurch gekennzeichnet, dass** das alkoholmodifizierte Aldehyd-Amin-Harz in einem Verhältnis von höchsten 60 Gew.-Teilen (Feststoff) je 100 Gew.-Teilen (Feststoff) des wärmehärtbaren Phenolharzes und gegebenenfalls Harnstoff, vorteilhaft wenigstens 10 Teile und besser noch zwischen 20 und 40 Teilen eingesetzt wird.

11. Zusammensetzung nach einem der Ansprüche 1 bis 10, **dadurch gekennzeichnet, dass** sie ein Phenol-Formaldehyd-Harz mit einem Gehalt an freiem Formaldehyd von höchstens 0,1% aufweist, gegebenfalls harnstoffmodifiziert, und ein Formaldehyd-Dicyandiamid-Glycerin-Harz oder ein Formaldehyd-Dicyandiamid-Oligosaccharid-Harz enthält.

12. Bindemittelzusammensetzung nach einem der Ansprüche 1 bis 11, **dadurch gekennzeichnet, dass** sie unter anderem die nachfolgenden Additive in den angegebenen Mengen bezogen auf 100 Gew.-Teile wärmehärtbares Phenolharz, gegebenenfalls harnstoffmodifiziert, und alkoholmodifiziertes Aldehyd-Amin-Harz enthält:
- 0 bis 2 Teile Silan, insbesondere ein Aminosilan,
- 0 bis 20 Teile Öl, vorzugsweise 4 bis 15 Teile,
- 0 bis 25 Teile eines Verzögerungskatalysators, beispielsweise Ammoniumsulfat oder Natriumhyposulfit, vorzugsweise weniger als 7 Teile
- 0 bis 25 Teile eines Zuckers, vorzugsweise Glucose oder Saccharose
- 0 bis 20 Teile Ammoniak (Lösung mit 20 Gew.-%), vorzugsweise weniger als 12 Teile
- 0 bis 20 Teile eines Silikon

13. Bindemittelzusammensetzung nach einem der Ansprüche 1 bis 12, **dadurch gekennzeichnet, dass** das alkoholmodifizierte Aldehyd-Amin-Harz einen pH-Wert zwischen 3 und 5 aufweist.

14. Für die Feuerhemmung geeigneter thermischer und/oder akustischer Dämmstoff auf Basis von Mineralwolle, insbesondere Steinwolle oder Glaswolle, gebunden mit einer Bindemittelzusammensetzung nach einem der Ansprüche 1 bis 13.

15. Dämmstoff nach Anspruch 14, **dadurch gekennzeichnet, dass** die Mineralwolle aus Glasfasern gebildet ist, die die nachfolgenden Bestandteile in den angegebenen Mengen in Gew.-% aufweist:
| | |
|---|---|
| SiO₂ | 39-55 %, vorzugsweise 40-52 % |
| Al₂O₃ | 16-27 %, vorzugsweise 16-25 % |
| CaO | 3-35 %, vorzugsweise 10-25 % |
| MgO | 0-15 %, vorzugsweise 0-10 % |
| Na₂O | 0-15 %, vorzugsweise 6-12 % |
| K₂O | 0-15 %, vorzugsweise 3-12 % |
| R₂O(Na₂O + K₂O) | 10-17 %, vorzugsweise 12-17 % |
| P₂O₅ | 0-3 %, vorzugsweise 0-2 % |
| Fe₂O₃ | 0-15 % |
| B₂O₃ | 0-8 %, vorzugsweise 0-4 % |
| TiO₂ | 0-3 %, |
wobei der MgO-Gehalt zwischen 0 und 5 % beträgt, wenn der R₂O-Gehalt kleiner oder gleich 13% ist.

16. Dämmstoff nach Anspruch 14, **dadurch gekennzeichnet, dass** das Glas die nachfolgenden Bestandteile in den angegebenen Mengen aufweist (in Gew.-%):
| | |
|---|---|
| SiO₂ | 39-44 %, vorzugsweise 40-43 % |
| Al₂O₃ | 16-27 %, vorzugsweise 16-26 % |
| CaO | 6-20 %, vorzugsweise 8-18 % |
| MgO | 1-5 %, vorzugsweise 1-4,9 % |
| Na₂O | 0-15 %, vorzugsweise 2-12 % |
| K₂O | 0-15 %, vorzugsweise 2-12 % |
| R₂O(Na₂O + K₂O) | 10-14,7 %, vorzugsweise 10-13,5 % |
| P₂O₅ | 0-3 %, insbesondere 0-2 % |
| Fe₂O₃ | 1,5-15 %, insbesondere 3,2-8 % |
| B₂O₃ | 0-2 %, vorzugsweise 0-1 % |
| TiO₂ | 0-2 %, vorzugsweise 0,4-1 % |

17. Dämmstoff nach einem der Ansprüche 14 bis 16, **dadurch gekennzeichnet, dass** die Gesamtmenge der wärmehärtbaren Harzes, gegebenfalls von Harnstoff und des alkoholmodifizierten Aldehyd-Amin-Harzes zwischen 1 und 20 Gew.-% (Feststoff) bezogen auf das Gesamtgewicht des Dämmstoffs beträgt.

## Claims

1. A sizing composition for the manufacture of a fire-resistant thermal and/or acoustic insulation product based on mineral wool, **characterized in that** it contains:
- a thermosetting resin which is a phenolic resin and
- an aldehyde-amine resin modified by an alcohol, the alcohol being any compound containing at least one free hydroxyl function, with the exception of the phenolic compounds,
the aldehyde-amine resin modified by an alcohol is used in a proportion of 5 to 70 parts, by weight of solids per 100 parts by weight of solids of thermosetting resin and where appropriate of urea.

2. The composition as claimed in claim 1, **characterized in that** the phenolic thermosetting resin is a resol, optionally modified by urea.

3. The composition as claimed in claim 2, **characterized in that** the phenolic resin has a proportion of free aldehyde at most equal to 0.1 %.

4. The composition as claimed in one of claims 1 to 3, **characterized in that** the aldehyde being incorporated into the composition of the aldehyde-amine resin modified by an alcohol is chosen from formaldehyde, paraformaldehyde, acetaldehyde and glyoxal, preferably formaldehyde or paraformaldehyde.

5. The composition as claimed in one of claims 1 to 4, **characterized in that** the amine being incorporated into the composition of the aldehyde-amine resin modified by an alcohol is dicyandiamide, melamine, guanidine and aminoguanidine, preferably dicyandiamide.

6. The composition as claimed in one of claims 1 to 5, **characterized in that** the alcohol being incorporated into the composition of the aldehyde-amine resin modified by an alcohol contains at least 2 free hydroxyl functions, preferably at least 3 and advantageously at most 100, preferably at most 10.

7. The composition as claimed in claim 6, **characterized in that** the alcohol is glycerol or a saccharide, preferably an oligosaccharide.

8. The composition as claimed in claim 7, **characterized in that** it is glucose or sucrose.

9. The composition as claimed in one of claims 1 to 8, **characterized in that** the aldehyde-amine resin modified by an alcohol is obtained by reaction of formaldehyde, dicyandiamide and glycerol or of formaldehyde, dicyandiamide and oligosaccharides.

10. The composition as claimed in one of claims 1 to 10, **characterized in that** the aldehyde-amine resin modified by an alcohol is used in a proportion of at most 60 parts by weight (of solids) per 100 parts by weight (of solids) of thermosetting resin and where appropriate of urea, advantageously at least 10 parts and better still from 20 to 40 parts.

11. The composition as claimed in one of claims 1 to 10, **characterized in that** it contains a phenol-formaldehyde resin having a free formaldehyde content at most equal to 0.1%, optionally modified by urea, and a formaldehyde-dicyandiamide-glycerol or formaldehyde-dicyandiamide-oligosaccharides resin.

12. The sizing composition as claimed in one of claims 1 to 11, **characterized in that** it furthermore includes the additives below in the following proportions calculated on the basis of 100 parts by weight of thermosetting resin, where appropriate of urea, and of aldehyde-amine resin modified by an alcohol:
- 0 to 2 parts of silane, in particular an aminosilane,
- 0 to 20 parts, preferably 4 to 15 parts, of oil,
- 0 to 25 parts, preferably less than 7 parts, of a crosslinking catalyst, for example ammonium sulfate or sodium hyposulfite,
- 0 to 25 parts of a sugar, preferably glucose or sucrose,
- 0 to 20 parts, preferably less than 12 parts, of aqueous ammonia (20 wt% solution),
- 0 to 20 parts of a silicone.

13. The sizing composition as claimed in one of claims 1 to 12, **characterized in that** the aldehyde-amine resin modified by an alcohol has a pH ranging from 3 to 5.

14. A fire-resistant thermal and/or acoustic insulation product, based on mineral wool, especially rock wool or glass wool, bound by a sizing composition as claimed in one of claims 1 to 13.

15. The product as claimed in claim 14, **characterized in that** the mineral wool consists of glass fibers, the glass of which comprises the constituents below in the following proportions, expressed as percentages by weight:
| | |
|---|---|
| SiO₂ | 39-55%, preferably 40-52% |
| Al₂O₃ | 16-27%, preferably 16-25% |
| CaO | 3-35%, preferably 10-25% |
| MgO | 0-15%, preferably 0-10% |
| Na₂O | 0-15%, preferably 6-12% |
| K₂O | 0-15%, preferably 3-12% |
| R₂O (Na₂O + K₂O) | 10-17%, preferably 12-17% |
| P₂O₅ | 0-3%, preferably 0-2% |
| Fe₂O₃ | 0-15%, |
| B₂O₃ | 0-8%, preferably 0-4% |
| TiO₂ | 0-3%, |
the MgO content being between 0 and 5% when the R₂O content is less than or equal to 13.0%.

16. The product as claimed in claim 14, **characterized in that** the glass comprises the constituents below in the following proportions (in wt%):
| | |
|---|---|
| SiO₂ | 39-44%, preferably 40-43% |
| Al₂O₃ | 16-27%, preferably 16-26% |
| CaO | 6-20%, preferably 8-18% |
| MgO | 1-5%, preferably 1-4.9% |
| Na₂O | 0-15%, preferably 2-12% |
| K₂O | 0-15%, preferably 2-12% |
| R₂O (Na₂O + K₂O) | 10-14.7%, preferably 10-13.5% |
| P₂O₅ | 0-3%, especially 0-2% |
| Fe₂O₃ | 1.5-15%, especially 3.2-8% |
| B₂O₃ | 0-2%, preferably 0-1% |
| TiO₂ | 0-2%, preferably 0.4-1%. |

17. The product as claimed in one of claims 14 to 16, **characterized in that** the total amount of thermosetting resin, optionally of urea, and of aldehyde-amine resin modified by an alcohol represents 1 to 20% by weight (of solids) relative to the total weight of the insulation product.
